# EUROPÄISCHE PATENTSCHRIFT

(11) **EP 0 877 500 B1**
(45) Veröffentlichungstag und Bekanntmachung des Hinweises auf die Patenterteilung: **22.03.2006**
(21) Anmeldenummer: 98890125.2
(22) Anmeldetag: 04.05.1998
(51) Int. Cl.: H04B 7/26, H04J 3/06, H04J 3/07, H04L 7/00, H04L 7/04, H04L 7/10

(54) **Verfahren und Anordnung zur Synchronisierung von Datenübertragung**
Method and device for synchronisation of data transmission
Méthode et dispositif de synchronisation de transmission numérique

(30) Priorität: 05.05.1997 AT 76997
(43) Veröffentlichungstag der Anmeldung: 11.11.1998
(73) Patentinhaber: FREQUENTIS GmbH, 1120 Wien (AT)
(72) Erfinder: Wachtler, Alex, Dipl.-Ing., 2232 Deutsch Wagram (AT)
(74) Vertreter: Wildhack, Helmut

(56) Entgegenhaltungen:
- US-A- 4 759 040
- US-A- 4 790 013
- US-A- 5 199 031
- PATENT ABSTRACTS OF JAPAN vol. 1996, no. 05, 31. Mai 1996 (1996-05-31) -& JP 08 018494 A (MITSUBISHI ELECTRIC CORP), 19. Januar 1996 (1996-01-19) -& US 5 781 595 A (MITSUBISHI ELECTRIC CORP.) 14. Juli 1998 (1998-07-14)
- ITU-T: "G.728 Coding of speech at 16 kbit/s using low-delay code excited linear prediction" ITU-T G.728, [Online] September 1992 (1992-09), Seiten 1-18, XP002238207 Geneva Gefunden im Internet: <URL:www.itu.org> [gefunden am 2003-04-10]
- SOLLENBERGER N R ET AL: "ARCHITECTURE AND IMPLEMENTATION OF AN EFFICIENT AND ROBUST TDMA FRAME STRUCTURE FOR DIGITAL PORTABLE COMMUNICATIONS" IEEE TRANSACTIONS ON VEHICULAR TECHNOLOGY, IEEE INC. NEW YORK, US, Bd. 40, Nr. 1, 1. Februar 1991 (1991-02-01), Seiten 250-260, XP000225631 ISSN: 0018-9545

## Beschreibung

Die Erfindung betrifft ein Verfahren zur Übertragung von Daten gemäß dem Oberbegriff des Patentanspruches 1. Des weiteren betrifft die Erfindung eine Anordnung zur Übertragung von Daten gemäß dem Oberbegriff des Patentanspruches 10.

Bei der Übertragung von Daten, insbesondere von komprimierten Sprachdaten, ist es bekannt, die Synchronisation zwischen dem Sender und dem Empfänger mittels des am Beginn der jeweiligen, die Daten enthaltenden Übertragungsrahmen vorgesehenen Bits zu bewerkstelligen. Dabei wird das an der Spitze des Übertragungsrahmens stehende Bit durch ein willkürlich gesetztes Synchronisationsbit ersetzt; in aufeinanderfolgend abgesandten Übertragungsrahmen werden diese ersten Bits abwechselnd auf 1 bzw. 0 gesetzt und diese alternierende Bitfolge ermöglicht die gegenseitige Synchronisation. Diese Art der Synchronisation hat als Nachteil eine Verminderung der Sprachqualität, da Daten verloren gehen und nicht mehr zur Übertragung von Sprache zur Verfügung stehen; des weiteren besteht der beträchtliche Nachteil einer relativ langen Synchronisationszeit, die größer als 100 ms ist. Diese Synchronisationszeit könnte zwar verkürzt werden, jedoch lediglich auf Kosten der Übertragungssicherheit und der Sprachqualität. Eine ähnliche Vorgangsweise ist z.B. aus der EP-A2-0158302 bekannt.

Aus der US 5,781,595 A sind ein Verfahren und eine Anordnung der eingangs genannten Art bekannt. Dabei werden Übertragungsrahmen generiert, in die die zu übertragenden Daten aufgegeben werden. Die einzelnen Übertragungsrahmen umfassen einen Header, der sich von dem Header eines Übertragungsrahmens, in dem keine Daten übertragen werden, unterscheiden. Zur Synchronisation der Anordnung werden Übertragungsrahmen ohne Daten übertragen, an deren Ende eine Synchronisationskennung enthalten ist. Diese Synchronisationskennung synchronisiert die einzelnen Stationen und kündigt des weiteren an, dass ein Übertragungsrahmen mit Daten folgt. Über die Anzahl der Vektoren, die allenfalls in derartigen Übertragungsrahmen enthalten sind, wird keine Aussage getroffen.

Aus der US 4,759,040 A ist es bekannt, in Übertragungsrahmen Prüfbitfolgen zu übersenden.

Aus Coding of speech at 16 kbit/s using low-delay code excited linear prediction ITU-T G.728 September 1992(1992-09), Seiten 1-18, XP002238207 Geneva sind grundsätzliche Bedingungen und Zusammenhänge bei der Codierung von Daten und dem Aufbau von Übertragungsrahmen zu entnehmen.

Die Erfindung setzt sich nunmehr zum Ziel, gegebenenfalls unter zusätzlicher Verwendung dieser bekannten Synchronisationsweise zwischen einer Sendeeinheit und einer Empfangseinheit, zwischen denen vorteilhafterweise komprimierte Sprachdaten übertragen werden, ganz allgemein die Synchronisationszeiten bei der Übertragung von Daten herabzusetzen. Insbesondere soll eine Synchronisation der Empfangseinheit innerhalb einer Zeitspanne erreicht werden, die in der Größenordnung der Länge eines Übertragungsrahmens der Daten liegt, ohne die Sprachqualität und Übertragungssicherheit zu beeinträchtigen bzw. der Aufbau der Anordnung soll möglichst einfach und betriebssicher sein.

Diese Ziele werden bei einem Verfahren der eingangs genannten Art erfindungsgemäß durch die im Kennzeichen des Anspruches 1 angeführten Merkmale erreicht. Bei einer Anordnung der eingangs genannten Art werden diese Ziele mit den im Kennzeichen des Anspruches 10 angeführten Merkmalen erreicht.

Aufgrund der erfindungsgemäßen Vorgangsweise kann die Synchronisationszeit ohne weiteres auf die Länge eines Synchronisationsrahmens reduziert werden. An einen Synchronisationsrahmen schließt unmittelbar folgend ein Übertragungsrahmen an und das Ein treffen eines Übertragungsrahmens nach einem Synchronisationsrahmen wird in der Empfangseinheit sofort durch das Synchronisationsbit oder die Synchronisationsbitfolge des Übertragungsrahmens erkannt. Wird z.B. durch ein PTT-Signal eine Datenübertragung eingeleitet, so schließt der erste Übertragungsrahmen unmittelbar an den letzten fertig abgesendeten Synchronisationsrahmen an; wenn das Absenden eines Synchronisationsrahmens nicht länger als 10 ms (z.B. bei Verwendung von LD-CELP-Codierern) dauert, so werden die zu übertragenden Daten maximal 10 ms nach Eintreffen des PTT-Signals auf das Übertragungsmedium aufgegeben. Da die Empfangseinheit durch den (die) vorangehenden Synchronisationsrahmen bereits synchronisiert ist, wird das Eintreffen eines Übertragungsrahmens aufgrund seines(r) Synchronisationsbit(folge) sofort erkannt, und es tritt in der Empfangseinheit keine weitere Zeitverzögerung auf. Die Sicherheit der Übertragung wird dadurch nicht beeinträchtigt. Wenn die Synchronisationsbit(folge) von aufeinanderfolgenden Übertragungsrahmen alternierend unterscheidbar bzw. unterschiedlich gestaltet sind, erfolgt - wie an sich bekannt - während der Übertragung von Daten die weitere Synchronisation der Empfangseinheit durch die vorzugsweise an der Spitze eines jeden Übertragungsrahmens definiert gesetzten Bits bzw. Bitfolgen.

Wenn die Merkmale des Anspruches 14 vorgesehen sind, so ergibt sich eine den Standards entsprechende einfache Vorgangsweise, insbesondere wenn die Merkmale der Ansprüche 3 und 4 befolgt werden.

Eine Erhöhung der Redundanz und eine mögliche Verkürzung der Synchronisationszeit unter die Länge eines Synchronisationsrahmens ergibt sich, wenn gemäß den Merkmalen des Anspruches 5 vorgegangen wird.

Damit ist klar der Übergang von einem Synchronisationsrahmen zu einem Übertragungsrahmen erkennbar

Wird gemäß den Merkmalen der Ansprüche 6 und 7 vorgegangen, so ist es für die Emfpangseinheit leicht erkennbar, zu welchem Zeitpunkt ein Übertragungsrahmen eintritt; ab diesem Zeitpunkt ist nur mehr die Überprüfung von einlangenden Übertragungsrahmen und die Synchronisation zu diesen Übertragungsrahmen von Bedeutung. Mit den vorgesehenen Stopprahmen kann ein eindeutiges Ende einer Datenübertragung der Empfangseinheit mitgeteilt werden.

In den Merkmalen der Ansprüche 11, 12 und 13 ist ein vorteilhafter Aufbau der erfindungsgemäßen Anordnung wiedergegeben.

Vorteilhafte Ausführungsformen der Erfindung ergeben sich aus der folgenden Beschreibung, der Zeichnung und den Patentansprüchen.

Im folgenden wird die Erfindung anhand der Zeichnung beispielsweise näher erläutert.

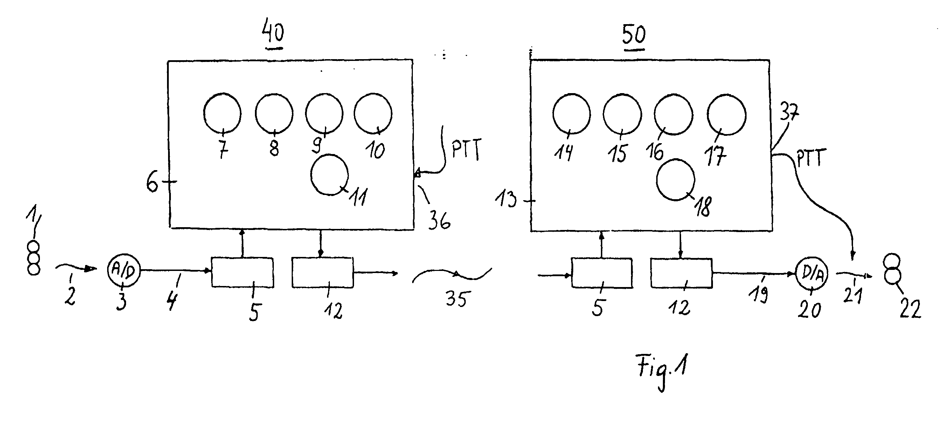

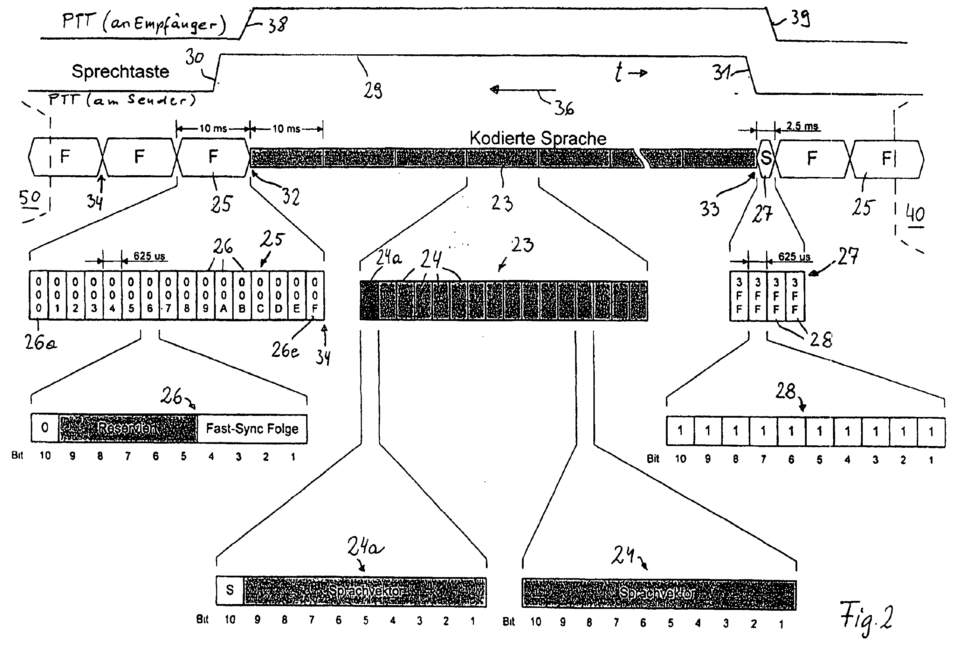

Fig. 1 zeigt schematisch den Aufbau einer Sendeeinheit und einer Empfangseinheit. Fig. 2 zeigt schematisch die Übertragung von Daten zwischen der Sendeeinheit und der Empfangseinheit.

Mit 1 ist in Fig. 1 eine Sende- bzw. Eingabestelle für Daten bezeichnet, welche Daten zu einer Empfangsstelle 22 übertragen werden sollen. Bei der Sendestelle 1 kann es sich z.B. um Telefone, Faxgeräte, Videogeräte, Computer od.dgl. Anlagen handeln, welche Daten oder Signale im allgemeinsten Sinne liefern. Bei der Empfangsstelte 22 kann es sich um jegliche Art von Empfänger handeln, z.B. um Telefone, Lautsprecher, Faxgeräte, Videogeräte, Rechner od.dgl. Anlagen.

Derartige Anordnungen zur Übertragung von Daten werden z.B. bei Funkleitzentralen, insbesondere für Taxis, bei Flugsicherungsanlagen, insbesondere für den Sprechfunkverkehr zwischen dem Tower und den Flugzeugen sowie zwischen Tower und Flugkontrolizentrale, usw. eingesetzt. Als Übertragungsmedium 35 für diese Daten zwischen einer vorgesehenen Sendeeinheit 40 und einer vorgesehenen Empfangseinheit 50 können metallische Leitungen, Lichtwellenleiter, Funkwellenstrecken od.dgl. vorgesehen werden.

Die Übertragung der Daten kann in codierter und/oder komprimierter Form erfolgen; die Datenübertragung im Übertragungsmedium 35 erfolgt in serieller Form.

Die zu übertragenden Daten werden von der Sendestelle 1 über eine Leitung 2 beliebiger Art allenfalls einem für die Sprachwandlung vorgesehenen A/D-Wandler 3 und von diesem über eine Leitung 4 beliebiger Art einem Eingangsspeicher 5 der Sendeeinheit 40 zugeführt. Die Sendeeinheit 40 umfaßt eine Steuereinheit 6. die vorteilhafterweise einen LD-CELP-Codierer 7, eine Umschalteinheit 8, einen Synchronisationsrahmengenerator 9, einen Stopp-Rahmengenerator 10 und einen Übertragungsrahmengenerator 11 umfaßt, welch letzter auch die erforderlichen Übertragungsrahmen 23 generieren kann. Diese einzelnen Einheiten werden von der Steuereinheit 6 ihrer Funktion und Arbeitsweise entsprechend eingesetzt. Diese einzelnen Bauteile können hardwaremäßig getrennt oder integriert vorliegen. In der Praxis können die Funktionen dieser Einheiten durch entsprechende Rechnerfunktionen bzw. mit entsprechend programmierten bzw. programmierbaren Bauteilen verwirklicht werden.

Mit 36 ist ein Eingang der Sendeeinheit 40 bezeichnet, an dem ein eine Übertragung von Daten einleitendes Signal (z.B. PTT) empfangen werden kann bzw. eine entsprechende händische Betätigungseinrichtung (Taster) zur Einleitung der Datenübertragung angeschlossen sein kann. Ein derartiges Signal könnte auch durch an der Sendeeinheit zum Absenden bereitliegende Daten selbst generiert werden, durch ein entsprechendes Programm der Steuereinheit 6 können derartige Signale erkannt werden.

Die von der Sendeeinheit 40 abzusendenden Daten werden einem Ausgangsspeicher 12 zugeführt, der die Daten auf das Übertragungsmedium 35 aufgibt. Vom Übertragungsmedium 35 gelangen die Daten über einen Eingangsspeicher 5 in die Empfangseinheit 50, die eine Steuereinheit 13, gegebenenfalls mit einem LD-CELP-Decodierer 14, einer Umschalteinheit 15, einem Übertragungsrahmendetektor 16, einem Stopp-Rahmendetektor 17 und einem Synchronisationsrahmendetektor 18 umfaßt. Mit 37 ist ein Ausgang der Empfangseinheit 50 bezeichnet, an dem ein dem Signal am Eingang 36 der Steuereinheit 6 entsprechendes und den Beginn der Datenübertragung anzeigendes Signal abgeleitet werden kann. Mit diesem Signal könnte die Leitung 21 bzw. der Empfang von Sprachdaten in der Empfangsstelle 22, z.B. in Kopfhörem, freigegeben werden, um ein Rauschen während der Zeitspanne, in der keine Sprachdaten übertragen werden, zu vermeiden. Die empfangenen Daten werden einem Ausgangsspeicher 12 zugeführt, und von diesem, sofeme es sich um Sprachdaten handelt, über eine Leitung 19 beliebiger Art, einem D/A-Wandler 20 und über Leitungen 21 beliebiger Art der Empfangsstelle 22 zugeführt.

Auch die einzelnen Einheiten 14 bis 18 der Empfangseinheit 50 werden hinsichtlich ihrer Funktion und Arbeitsweise von der Steuereinheit 13 abgestimmt bzw. gesteuert und werden von Hardware-Bauteilen bzw. von programmierten bzw. programmierbaren Bauteilen gebildet.

Unter der Bezeichnung LD-CELP wird verstanden "low delay-code excited linear prediction"; unter PTT wird verstanden "push to talk". Soferne erfindungsgemäß tatsächlich LD-CELP Codierer 7 bzw. LD-CELP Decodierer 14 eingesetzt werden, so beträgt die kleinste Einheit von Bits, die vom LD-CELP Codierer 7 bzw. LD-CELP Decodierer 14 als unterscheidbar erkannt werden kann, 10. Eine derartige Einheit wird Vektor genannt und hat bei LD-CELP Codierern eine Länge von 10 Bit und eine Dauer von üblicherweise 625 µs. Es wird jedoch darauf hingewiesen, daß auch Vektoren anderer Länge, d.h. größerer oder kleinerer Bitanzahl und Länge, insbesondere beim Einsatz anderer Codierer und Decodierer, verwendet werden können. Unter Vektor wird somit allgemein eine Bitfolge bestimmter Länge verstanden.

Wie Fig. 2 zeigt, umfassen die Übertragungsrahmen 23, die Synchronisationsrahmen 25 und die Stopp-Rahmen 27 jeweils eine bestimmte Anzahl von Vektoren 24 bzw. 26 bzw. 28. Da die Länge der Übertragungsrahmen 23 und der Synchronisationsrahmen 25 gleich groß ist, umfassen diese auch jeweils eine gleiche Anzahl von Vektoren. Die Länge eines Stopp-Rahmens 27 unterscheidet sich von der Länge der Übertragungsrahmen 23 und wird vorteilhafterweise kleiner als diese gewählt und umfaßt z. B. nur vier Vektoren 28.

Wenn es sich um Sprachdaten handelt, werden diese vorteilhafterweise in codierter und komprimierter Form übertragen; dies ist vorteilhaft jedoch nicht unbedingt Voraussetzung für die Erfindung. Soferne analoge Daten übertragen werden, werden diese Daten in entsprechenden A/D Wandlem 3 bzw. D/A wandiern 20 umgesetzt, in digitaler Form vorliegende Daten können komprimiert werden, müssen aber nicht umgewandelt werden.

In Fig. 2 gibt Pfeil 36 die Richtung der Übertragung wieder. Es sind in Fig. 2 von links nach rechts drei Synchronisationsrahmen 25, daran anschließend eine Anzahl von Übertragungsrahmen 23, daran anschließend ein Stopp-Rahmen 27 und daran anschließend zwei Synchronisationsrahmen 25 dargestellt. Zu Betriebsbeginn und im Leerlauf werden von der Sendeeinheit 40 Synchronisationsrahmen 25 auf das Übertragungsmedium 35 aufgegeben. Ein derartiger Synchronisationsrahmen 25 umfaßt beispielsweise 16 Vektoren 26 zu jeweils 10 Bit. Zumindest der erste Vektor 26a dieser Vektoren 26, vorzugsweise alle diese Vektoren 26, besitzt(en) ein(e) definierte(s) bzw. gesetzte(s) Synchronisationbit(folge), das (die) vorzugsweise am Anfang des jeweiligen Vektors 26 gesetzt wird (werden), und zwar auf einen Wert, der sich von dem(r) ersten Anfangsbit(fotge) im ersten Vektor 24a, vorzugsweise zu Beginn des ersten Vektors 24a, gesetzten Bit des ersten von der Sendeeinheit 40 bei Beginn einer Datenübertragung gesendeten Übertragungsrahmens 23 eindeutig unterscheidet. Anstelle eines Bits können auch Bittolgen gesetzt und verglichen werden. Im vorliegenden vorteilhaften Fall wird das erste Bit des ersten Vektors 26a, vorzugsweise aller Vektoren 26, des Synchronisationsrahmens 25 auf 0 gesetzt. Die im Vektor 26a folgenden, insbesondere neun Bits, sind zumindest teilweise zur Ausbildung von charakteristischen Prüfbitfolgen vorgesehen. In der Fig. 2 sind die zehn Bits der Vektoren 26 jeweils durch drei Gruppen von Bits zu zwei bzw. jeweils vier Bits zusammenfaßt; im dargestellten Fall bilden die vier letzten Bit eines jeden Vektors 26 des Synchronisationsrahmens 25 aufeinanderfolgend die Zahlen von Oh bis Fh aus: Prinzipiell können alle Bits eines Vektors 26 für ein(e) Anfangsbit(folge) und eine Prüfbitfolge verwendet bzw. gesetzt werden.

Vorteilhafterweise beträgt die Gesamtlänge eines derartigen Vektors 625 µs, insbesondere bei Einsatz von LD-CELP-Codierem und -Decodierem, sodaß die Gesamtlänge des Synchronisationsrahmens 25 10 ms beträgt.

Die Übertragungsrahmen 23 sind wie die Synchronisationsrahmen 25 in eine gleiche Anzahl von z.B. 16 Vektoren 24 mit jeweils gleicher Bitanzahl, z.B. 10 Bit, unterteilt. Bei dem Übertragungsrahmen 23 wird ein Bit oder eine Bitfolge im ersten Vektor 24a, vorzugsweise zu Beginn des Vektors 24a, definiert als Synchronisationsbit(folge) (Bit S in Fig.2) gesetzt, wobei diese(s) Synchronisationsbit(folge) unterschiedlich zum ersten Bit bzw. zur Anfangsbitfolge des ersten Vektors 26a, vorzugsweise aller Vektoren 26, der Synchronisationsrahmen 25 ist. Die weiteren Bits des ersten (Sprach)Vektors 24a und alle weiteren Bits der weiteren Vektoren 24 des jeweiligen Übertragungsrahmens 23 stehen zur Datenübertragung zur Verfügung.

Es wird bemerkt, daß nicht das erste Bit des ersten Vektors 24a das Synchronisationsbit sein muß, sondern daß eine entsprechende Bitanzahl bzw. eine entsprechende Bitfolge zur Synchronisation verwendet werden kann. Wesentlich ist, daß sich ein definiertes, vorzugsweise das erste Bit bzw. eine definierte, vorzugswiese am Anfang liegende, Bitfolge des ersten Vektors 24a des Übertragungsrahmens 23 von dem Anfangsbit bzw. von der Anfangsbitfolge des ersten Vektors 26a, gegebenenfalls aller Vektoren 26, der Synchronisationsrahmen 25 unterscheidet, sodaß die Empfangseinheit 50 erkennen kann, ob es sich um einen Vektor 24a oder um einen Vektor 26a, gegebenenfalls um Vektoren 26, handelt. Um dies zu erkennen, muß der mögliche Zeitpunkt des Eintreffens des ersten Vektors 24a eines Übertragungsrahmens 23 festgelegt bzw. bekannt sein, was mit Hilfe der Synchronisationsrahmen 25 erreicht wird, die vor dem Absenden der Übertragungsrahmen 23 die Empfangseinheit 50 in Bezug auf die Sendeeinheit 40 synchronisiert haben.

Ein Stopp-Rahmen 27 umfaßt eine gewisse Anzahl von Vektoren 28, wobei besonderer Wert darauf gelegt wird, daß diese Vektoren 28 den bei Sprachdatenübertragung üblicherweise auftretender Vektoren 24 vom Inhalt her möglichst unähnlich sind. Aus diesem Grund könnten sämtliche Bits der einzelnen Vektoren 28 eines Stopp-Rahmens 27 auf 1 gesetzt werden. Die Länge des Stopp-Rahmens 27 bzw. die Anzahl der Vektoren 28 kann beliebig festgesetzt werden, sollte jedoch aus Zeitgründen nicht mehr als 8 Vektoren betragen. Die Länge der Vektoren 28 entspricht vorteilhafterweise der Länge der Vektoren 24 bzw. 26.

Der LD-CELP Codierer 7 der Sendeeinheit 40 produziert aus den über den Eingangsspeicher 5 einlangenden Signalen bzw. Eingangsvektoren, die z.B. aus fünf Abtastwerten (sampies) der Sprache bestehen, einen Ausgangsvektor. Bei einer Abtastung der einlangenden Signale mit 8 kHz und einer Auflösung von 8 Bit (PCM A-Law oder µ-Law) ergibt sich die Länge eines Eingangsvektors von 5 x 8 Bit = 40 Bit bzw. eine Zeitdauer von 5 x 125 µs = 625 µs. Diese 40 Bit der fünf Eingangsvektoren werden zu einem Ausgangsvektor einer Länge von 10 Bit komprimiert, welche Komprimierung sich bei der Übertragung von Sprachdaten als vorteilhaft erwiesen hat. Dieser Ausgangsvektor mit einer Länge von 10 Bit hat somit ebenfalls eine Länge von 625 µs, womit sich eine Reduktion der Bandbreite um den Faktor 4 ergibt. Der LD-CELP Decodierer 14 expandiert die derart komprimiert einlangenden Sprachdaten. Diese Wirkungsweise von LD-CELP Codierern 7 bzw. LD-CELP Decodierem 14 ist bekannt und wird für besonders vorteilhafte Ausführungsformen der Erfindung genutzt. 16 dieser derart erzeugten Ausgangsvektoren 24 mit einer Länge von 10 Bit werden zu Übertragungsrahmen 23 zusammengefaßt, sodaß ein Übertragungsrahmen 23 die Zeitdauer von 10 ms besitzt. Gleiche Länge bzw. Zeitdauer besitzen der Einfachheit halber auch die Synchronisationsrahmen 25. Diese Wahl von Länge und Zeitdauer von Übertragungsrahmen 23 und Synchronisationsrahmen 25 ist sehr vorteilhaft, aber nicht zwingend. Der LD-CELP Codierer 7 bzw. der LD-CELP Decodierer 14 kann die Funktion eines Übertragungsrahmengenerators bzw. -detektors übernehmen.

Im Leerlauf bzw. zu Betriebsbeginn generiert der LD-CELP Codierer 7 bzw. der Synchronisationsrahmen-Generator 9 der Sendeeinheit 40 unter entsprechender Steuerung der Steuereinheit 6 aufeinanderfolgende Synchronisationsrahmen 25. Diese Synchronisationsrahmen 25 besitzen 16 Vektoren, deren Anfangsbit jeweils auf 0 gesetzt ist. Wie dem dargestellten Vektor 26 zu entnehmen ist, sind die 5 folgenden Bits reserviert und die vier Endbits jedes dieser 16 Vektoren bilden der Reihe nach die Zahlen Oh bis Fh.

Wird, wie bei 30 schematisch angedeutet, eine Signalübertragung, z.B. durch Betätigung einer PTT-Taste eingeleitet, so wird von der Sendeeinheit 40, insbesondere mit einer Umschalteinheit 18, das Absenden der Synchronisationsrahmen 25 gestoppt und auf das Absenden von Übertragungsrahmen 23 umgeschaltet. Der erste Übertragungsrahmen 23 folgt unmittelbar auf den zuletzt generierten Synchronisationsrahmen 25; eine Verstümmelung von Synchronisationsrahmen 25 erfolgt nicht, auch wenn das Sendesignal während der Generierung des Synchronisationsrahmens 25 eintrifft; der gerade generierte Synchronisationsrahmen 25 wird zur Gänze abgesendet, unmittelbar gefolgt vom ersten Ubertragungsrahmen 23. Es ergibt sich somit eine maximale Sendeverzögerung in der Länge eines Synchroniationsrahmens, insbesondere von 10 m s.

Mit den Synchronisationsrahmen 25 wird die Empfangseinheit 50 in bezug auf die Sendeeinheit 40 synchronisiert, indem mit dem Synchronisationsrahmendetektor 18 der Empfangseinheit 50 vorerst festgestellt wird, daß irgendeine Übertragung stattfindet; die einlangenden Vektoren 26 werden detektiert und ihr Inhalt überprüft. Es werden Anfangsbits bzw. Anfangsbitfolgen gesucht bzw. überprüft, um festzustellen, ob es sich um den ersten Vektor 24a eines Übertragungsrahmens 23 oder einen Vektor 26a eines Synchronisationsrahmens 25 handelt. Die Tatsache, daß der erste Vektor 24a des ersten abgesandten Übertragungsrahmens 23 ein konträres Synchronisationsbit oder eine unterschiedliche Synchronisationsbitfolge gegenüber dem Anfangsbit bzw. gegenüber der Anfangsbitfolge des ersten Vektors 26a eines Synchronisationsrahmens 25 zeigt, ermöglicht, daß die Empfangseinheit 50 erkennen kann, ob es sich um einen Vektor 24a eines Übertragungsrahmens 23 oder den Vektor 26a eines Synchronisationsrahmens 25 handelt.

Des weiteren ist vorgesehen, daß der Übertragungsrahmendetektor 16 der Empfangseinheit 50 feststellt, wie das Prüfbitmuster der einzelnen Vektoren 26 gestaltet ist bzw. ob ein(e) Prüffolge bzw. -muster feststellbar ist. Durch Vergleich mit entsprechenden Vorgaben von Bits bzw. Bitmustern kann nach einer Detektion einer Anzahl von Vektoren 26 festgestellt werden, ob ein(e) vorgegebene(s) Folge bzw. Muster von Prüfbitfolgen empfangen wird und ob eine bestimmte Anzani von Prüfbitfolgen hintereinander eingetroffen ist. Da vorab festgelegt wurde und demzufolge erkannt werden kann, daß der letzte Vektor 26e in einem Synchronisationsrahmen 25 eine bestimmte Prüfbitfolge aufweist und auch bekannt ist bzw. festgelegt wurde, welche Prüfbitfolge der erste Vektor 26a eines Synchronisationsrahmens besitzt, kann der Übergang 34 vom letzten Vektor 26e des vorangehenden zum ersten Vektor 26a des folgenden Synchronisationsrahmens 25 aufgrund der Prüfbitfolgen bzw. des Prüfmusters erkannt werden. Ein Übergang 34 könnte z.B. auch dann erkannt werden, wenn eine bestimmte Anzahl von Prüfbitfolgen eingelangt ist und das Einlangen der Prüfbitfolge des letzten Vektors 26e erkannt wurde. An diesem letzten Vektor 26e kann nur ein Vektors 26a mit entsprechendem(r) Anfangsbit(folge) oder ein Vektor 24a mit entsprechendem(r) Synchronisationsbit(folge) anschließen. Dieser Übergang 34 wird auf eine dieser Arten festgestellt und zur Synchronisation zwischen Sendeeinheit 40 und Empfangseinheit 50 herangezogen.

Wenn z.B. 16 aufeinanderfolgend eingetroffene Vektoren 26 überprüft worden sind und als 17. Vektor erneut ein Vektor eines Synchronisationsrahmens 25 eintrifft, der an dem(r) Anfangsbit(folge) und/oder Prüfbitfolge erkannt wird, so erkennt die Empfangseinheit 50, daß unter den vorangehenden 16 Vektoren irgendwo ein Übergang 34 von einem letzten Vektor 26e eines Synchronisationsrahmens 25 auf einen ersten Vektor 26a eines Synchronisationsrahmens 25 erfolgt ist und dieser Übergang 34 wird rückwirkend als Synchronisationszeitpunkt bzw. -basis genommen. Bereits mit dem Eintreffen des siebzehnten Vektors ist somit eine eindeutige Synchronisation erreicht; die verstrichene Zeitspanne entspricht 10 ms.

Wenn die Synchronisation hergestellt worden ist, so erwartet die Empfangseinheit 50 jeweils nach dem Einlangen eines Endvektors 26e eines Synchronisationsrahmens 25 das Einlangen eines Anfangsvektors 26a eines Synchronisationsrahmens 25. Da das (die) Synchronisationsbit(folge) eines Anfangsvektors 24a eines Übertragungsrahmens 23 gegenüber dem(n) Anfangsbit(s) des ersten Vektors 26a der Synchronisationsrahmen 25 unterschiedlich ist, wird das Eintreffen eines zu den(r) Anfangsbits(folge) konträren Bits bzw. einer unterschiedlichen Bitfolge als Beginn eines Übertragungsrahmens 23 gewertet.

Ist der siebzehnte eintreffende Vektor ein Anfangsvektor 24a eines Übertragungsrahmens 23, so erkennt die Steuereinheit 13 das (die) konträr bzw. unterschiedlich gesetzte Synchronisationsbit(folge), das (die) unmittelbar auf einen eine charakteristische, erkennbare und festgelegte Prüfbitfolge aufweisenden Endvektor bzw. letzten Vektor 26e eines Synchronisationsrahmens 25 folgt und erkennt damit den Beginn einer Datenübertragung bzw. synchronisiert sich auf das Ende des letzten Vektors 26e.

Sehr von Vorteil ist es, wenn sämtliche Vektoren 26 eines Synchronisationsrahmens 25 dieselbe Anfangsbitfolge bzw. dasselbe Anfangsbit zeigen, so daß die Empfangseinheit 50 bzw. deren Synchronisationsdetektor 18 dadurch rasch und mit großer Wahrscheinlichkeit, insbesondere dann, wenn derartige Vektoren hintereinander eintreffen, feststelten kann, ob es sich um einen Vektor 26 eines Synchronisationsrahmens 25 handelt oder nicht.

In dem Moment, in dem das Synchronisationsbit bzw. die Synchronisationsbitfolge eines Übertragungsrahmens 23 detektiert wird, schaltet eine Umschalteinheit 15 der Empfangseinheit 50 die Detektion von einer Detektion von Synchronisationsrahmen 25 auf die Detektion von Übertragungsrahmen 23 um, d.h., daß ab diesem Zeitpunkt das (die) Synchronisationsbit(folge) eines jeden der aufeinanderfolgend einlangenden Übertragungsrahmen 23 überprüft wird und mit dieser fortgesetzten Überprüfung erfolgt eine Synchronisation zwischen der Sendeeinheit 40 und der Empfangseinheit 50 während der Datenübertragung. Um diese Synchronisation während der Übertragung von Übertragungsrahmen 23 zu gewährleisten, besitzen unmittelbar aufeinanderfolgende Übertragungsrahmen 23 jeweils, insbesondere abwechselnd bzw. altemierend, unterschiedliche Synchronisationsbits(fotgen). Wenn z.B. der erste Übertragungsrahmen 23 als Synchronisationsbit das Anfangsbit "1" besitzt, so besitzt der folgende Übertragungsrahmen 23 als Anfangsbit "0", der nächstfotgende Übertragungsrahmen 23 wieder das Anfangsbit "1" usw. Da in der Empfangseinheit 50 mittels der Umschalteinheit 15 ein Umschalten der Detektion von der Detektion von Synchronisationsrahmen 25 auf die Detektion von Übertragungsrahmen 23 erfolgt ist, besteht keine Gefahr, daß ein Übertragungsrahmen 23 mit einem Anfangsbit "0" als ein Vektor 26 eines Synchronisationsrahmens 25 gewertet wird, auch wenn, wie im vorliegenden Fall vorteilhafterweise alle ersten Bits der Vektoren 26 auf "0" gesetzt sind.

Aus Kompatibilitätsgründen zu bekannten Übertragungsverfahren unter Verwendung von LD-CELP Codierern und LD-CELP Decodierern, die im Dauerbetrieb arbeiten, d.h. die Codierung erfolgt ununterbrochen auch in Sprachpausen, wird vorteilhafterweise das erste Bit der Übertragungsrahmen 23 als Synchronisationsbit gesetzt, wobei das erste Bit des ersten Übertragungsrahmens 23 auf 1 gesetzt wird; die Reduktion der Sprachqualität wird inkauf genommen, da dieser Verlust an Sprachqualität auch bei den derzeit bekannten Sprachübertragungsverfahren auftritt.

Nachdem der letzte Übertragungsrahmen 23 abgesandt wurde, z.B. weil das PTT-Signal endet (Flanke 31), wird von einem Stopp-Rahmengenerator 10 der Sendeeinheit 40 ein Stopp-Rahmen 27 dem Übertragungsmedium 35 aufgegeben, der unmittelbar dem letzten Übertragungsrahmen 23 folgt. Dieser eine Anzahl von Vektoren 28 umfassende Stopp-Rahmen wird in der Empfangseinheit 50 von einem Stopp-Rahmendetektor 17 erkannt; der Zeitpunkt des Erkennens des Eintreffens eines Stopp-Rahmens 27 wird in der Empfangseinheit 50 als Übertragungsende bzw. Endsignal entsprechend der Flanke 39, d.h. dem Loslassen der PTT-Sprechtaste, gewertet.

Unmittelbar anschließend an die Generierung und Übertragung eines Stopp-Rahmens 27 durch den Stopp-Rahmengenerator 10 der Sendeeinheit 40 erfolgt eine Generierung und Übertragung von weiteren Synchronisationsrahmen 25 durch den Synchronisationsrahmengenerator 9.

Bei Eintreffen eines Stopp-Rahmens 27 in der Empfangseinheit 50, der im Stopp-Rahmendetektor 17 erkannt wird, erfolgt mit der Umschalteinheit 15 ein Umschalten von einer Detektion von Übertragungsrahmen 23 durch den Übertragungsrahmendetektor 16 auf eine Detektion von Synchronisationsrahmen 25 mit dem Synchronisationsrahmendetektor 18.

Das (die) Anfangsbit(folge) der einzelnen Vektoren 26 der Synchronisationsrahmen 25 dient somit zur Unterscheidung der einzelnen Vektoren 26 von dem ersten Vektor 24a des ersten Übertragungsrahmens 23; das Muster bzw. die Folge, die die Prüfbitfolge der einzelnen Vektoren 26 ausbildet, dient zur Festlegung des Synchronisationszeitpunktes und zur Feststellung, ob ein Synchronisationsrahmen 25 gesendet wird oder ob Vektoren 24, insbesondere der erste Vektor 24a, eines Übertragungrahmens 23 gesendet werden, die den Vektoren 26 eines Synchronisationsrahmens 25 ähnlich sein können. Wenn jedoch eine Anzahl aufeinanderfolgender Vektoren bei der Empfangseinheit 50 eintrifft, die -dasselbe Anfangsbit im vorliegenden Fall, z.B. 0, besitzen, so werden diese aufeinanderfolgend eintreffenden Vektoren vorerst als Vektoren eines Synchronisationsrahmens 25 gewertet. Wird bei einer Überprüfung der Prüfbitfolge dieser Vektoren ein vorgegebenes Muster bzw. eine vorgegebene Folge von Prüfbitfolgen erkannt, so wird diese Wertung bestätigt und es kann anhand dieser Folge von Prüfbitfolgen ein Übergang vom letzten Vektor 26e eines Synchronisationsrahmens 25 zum ersten Vektor 26a eines folgenden Synchronisationsrahmens 25 erkannt werden, womit die Synchronisation vollzogen ist. Wenn der Synchronisationsrahmendetektor 18 z.B. in sechzehn aufeinanderfolgenden Vektoren als Folge der Prüfbitfolgen die Zahlen Oh bis Fh detektiert hat, so erkennt er das Eintreffen eines vollständigen Synchronisationsrahmens 25. Zur Vereinfachung ist es von Vorteil, daß alle Vektoren 26 dasselbe (dieselbe) Anfangsbit(folge) aufweisen. Es wird aber darauf hingewiesen, daß das (die) Anfangsbit(folge) nicht zu Beginn der Vektoren 26 liegen muß.

Die erfindungsgemäße Vorgangsweise erlaubt die Synchronisation der Empfangseinheit 50, innerhalb der Zeitdauer eines Synchronisationsrahmens 25 von 10 ms. Erfolgt, wie aus dem Stand der Technik bekannt, eine Synchronisation lediglich mittels des ersten Bits des jeweils ersten Vektors von aufeinanderfolgenden Übertragungsrahmen 23, so benötigt eine Synchronisation bei gleicher Sicherheit und Genauigkeit mindestens die Übertragung von 16 Übertragungsrahmen 23, also 160 ms; die Anzahl der zu überprüfenden Übertragungsrahmen 23 wird dabei von der gewünschten Sicherheit bestimmt. Die erfindungsgemäße Vorgangsweise bietet bei vergleichbarer Sicherheit somit eine etwa 16fach kürzere Synchronisationszeit als sie bisher auch bei der Verwendung von LD-CELP Codierern und LD-CELP Decodierern möglich war. Von Vorteil ist es femer, daß bei der erfindungsgemäßen Vorgangsweise der Startzeitpunkt der Sprachübertragung 38 (PTT) am Empfänger eindeutig festliegt und damit kein Verlust von Übertragungsrahmen aufgrund fehlender Synchronisation auftritt, wie dies bei bekannten Anordnungen der Fall ist.

Die Umschalteinheit 8 der Sendeeinheit 40 wird extern durch das Einlangen eines Umschaltsignals bei 36, z.B. eines PTT-Signals 30, getriggert und bewirkt damit eine Umschaltung der Generierung von Synchronisationsrahmen 25 durch den Synchronisationsrahmengenerator 9 auf eine Generierung von Übertragungsrahmen 23 durch den Übertragungsrahmengenerator 11. Diese Generierung von Übertragungsrahmen 23 erfolgt bis zum Eintreffen eines gegenteiligen Befehls bzw. Signals bzw. bis zum Loslassen der PTT Taste, welcher Zeitpunkt mit 31 angedeutet ist. In diesem Moment wird durch den Stopp-Rahmengenerator 10 der Stopp-Rahmen 27 generiert, der dem letzten Übertragungsrahmen 23 unmittelbar angeschlossen wird.

Anstelle der Einleitung einer Übertragung durch Eintreffen eines PTT-Signales könnte ein Startsignal für eine Signatübertragung auch aus den zur Übertragung einlangenden bzw bereitgestellten Daten bzw. Signalen oder der Signalart abgeleitet und an den Eingang 16 angelegt werden.

Als Zeitpunkt des Einlangens eines PTT-Signals oder eines eine Datenübertragung auslösenden Signals nimmt bzw. erkennt die Empfangseinheit 50 den Übergang 38 des letzten einlangenden Synchronisationsrahmens 25 auf den ersten Übertragungsrahmen 23; als Beendigung einer Datenübertragung gilt der Übergang 39 vom Stopp-Rahmen 27 auf den ersten folgenden Synchronisationsrahmen 25.

In Fig. 2 ist oben der an der Empfangseinheit 50 erkennbare Verlauf des PTT-Signals und darunter der Verlauf des an der Sendeeinheit 40 einlangenden PTT-Signals dargestellt.

Unter einer Prüf- oder Synchronisations- oder Anfangs-Bitfolge wird nicht unbedingt eine unmittelbar aufeinanderfolge Anzahl von Bits verstanden, sondern nur eine Anzahl von definierten Bits im jeweiligen Vektor. Vorteilhafterweise liegen die Bits einer Folge hintereinander, insbesondere zu Beginn oder am Ende des Vektors.

## Patentansprüche

1. Verfahren zur Übertragung von Daten über ein Übertragungsmedium (35) zwischen einer Sendeeinheit (40) und einer Empfangseinheit (50), vorzugsweise für Funkleitzentralen oder Flugsicherungsanlagen, wobei die zu übertragenden Daten in unmittelbar aufeinanderfolgenden, eine bestimmte Anzahl von Vektoren aufweisenden Übertragungsrahmen (23) abgesendet werden und wobei ein Bit oder eine Bitfolge in einem Vektor, zumindest des ersten abgesendeten Übertragungsrahmens (23) willkürlich gesetzt und mit diesem gesetzten Synchronisationsbit oder dieser gesetzten Synchronisationsbitfolge während der Übertragung der Daten die Empfangseinheit (50) gegenüber der Sendeeinheit (40) synchronisiert wird, wobei im Leerlauf, das heißt in der Zeitspanne zwischen der Übertragung von Daten, und zu Betriebsbeginn von der Sendeeinheit (40) untereinander gleiche Synchronisationsrahmen (25) mit gleicher. Länge wie die Übertragungsrahmen (23) aufeinanderfolgend gesendet werden, **dadurch gekennzeichnet,**
- **dass** jeder Synchronisationsrahmen (25) eine Mehrzahl von Vektoren (26) umfasst und jeder Vektor (26) des Synchronisationsrahmens (25) an einer definierten Stelle ein definiertes und von der Empfangseinheit (50) erkennbares Anfangsbit oder eine definierte und von der Empfangseinheit (50) erkennbare Anfangsbitfolge aufweist, das oder die sich eindeutig von dem Synchronisationsbit oder der Synchronisationsbitfolge zumindest des ersten abgesandten Übertragungsrahmens (23) unterscheidet,
- und **dass** von der Empfangseinheit (50) das Eintreffen des Synchronisationsbits oder der Synchronisationsbitfolge des ersten Übertragungsrahmens (23) anstelle eines definierten Anfangsbit oder einer definierten Anfangsbitfolge In einem ersten Vektor eines Synchronisationsrahmens (25) als Beginn einer Datenübertragung erkannt und gewertet wird.

2. Verfahren nach Anspruch 1, **dadurch gekennzeichnet, dass** nur das erste Daten- oder Sprachbit des ersten Vektors eines Übertragungsrahmens (23) durch ein Synchronisationsbit ersetzt wird und dass das Anfangsbit der Vektoren des Synchronisationsrahmens (25) konträr zu diesem ersten Bit des Übertragungsrahmens (23) gesetzt wird.

3. Verfahren nach Anspruch 1 oder 2, **dadurch gekennzeichnet, daß** von der Sendeeinheit (40) Übertragungsrahmen (23) und Synchronisationsrahmen (25) je mit 16 Vektoren zu je 10 Bit generiert und abgesendet werden, und dass das erste Bit des ersten Vektors des ersten Übertragungsrahmens (23) mit "1" gesetzt wird und das erste Bit zumindest des ersten Vektors der Synchronisationsrahmen (25) auf "0" gesetzt wird.

4. Verfahren nach einem der Ansprüche 1 bis 3, **dadurch gekennzeichnet, dass** zur laufenden Synchronisation von Sendeeinheit (40) und Empfangseinheit (50) während der Übertragung von Daten aufeinanderfolgend abgesendete Übertragungsrahmen (23) alternierend das Synchronisationsbit oder die dem ersten Überträgungsrahmen (23) aufgeprägte Synchronisationsbitfolge, z. B. 1, und die ein Synchronisationsbit oder eine dazu eindeutig unterschiedliche Synchronisationsbitfolge, z. B. 0, aufweisen.

5. Verfahren nach einem der Ansprüche 1 bis 4, **dadurch gekennzeichnet,**
- **dass** in zumindest einer Anzahl, vorzugsweise in allen Vektoren, eines jeden Synchronisationsrahmens (25) eine definierte, vorzugsweise am Ende des jeweiligen Vektors gelegene, Prüfbitfolge enthalten bzw. definiert ist,
- **dass** die jeweiligen Prüfbitfolgen in aufeinanderfolgenden Vektoren eines Synchronisationsrahmens (25) eine von der Empfangseinheit (50) erkennbare Prüffolge oder ein von der Empfangseinheit (5) erkennbares Prüfmuster bilden, wobei vorteilhafterweise die jeweilige Prüfbitfolge in den Vektoren des Synchronisationsrahmens (25) von zumindest vier Bits definiert wird, die in aufeinanderfolgenden Vektoren der Reihe nach eine Prüffolge entsprechend den Zahlen Oh bis Fh ausbilden und
- **dass** die Empfangseinheit (50) für eine vorgegebene Anzahl von aufeinanderfolgenden Vektoren deren Prüfbitfolge und die von den Prüfbitfolgen gebildete Prüffolge überprüft und nach einem zumindest einmaligem Erkennen einer derartigen Prüffolge nach dem Einlangen des letzten Vektors eines Synchronisationsrahmens (25) das Eintreffen eines im ersten Vektor eines folgenden Synchronisationsrahmens (25) enthaltenen Anfangsbits oder einer derartigen Anfangsbitfolge erwartet und detektiert und zutreffendenfalls dieses Eintreffen eines Anfangsbits oder einer Anfangsbitfolge eines Synchronisationsrahmens (25) oder den damit definierten Übergang vom Endvektor des Synchronisationsrahmens (25) zum Anfangsvektor des folgenden Synchronisationsrahmens (25) als Basis für ihre Synchronisation heranzieht.

6. Verfahren nach einem der Ansprüche 1 bis 5, **dadurch gekennzeichnet,**
- **dass** die Empfangseinheit (50) das Eintangen eines Synchronisationsbits oder einers Synchronisationsbitfolge eines ersten Übertragungsrahmens (23) anstelle eines Anfangsbits oder einer Arifangsbitfolge eines Synchronisationsvektors als Beginn der Übertragung von Daten detektiert und akzeptiert und
- **dass** ab dem Zeitpunkt des Eintreffens des Synchronisationsbits oder der Synchronisationsbitfolge des ersten Übertragungsrahmens (23) bis zum Eintreffen eines Stopp-Rahmens (27) eine Detektion und Überprüfung des Eintreffens der gegebenenfalls alternierend unterschiedlichen Synchronisationsbits oder Synchronisationsbitfolgen aufeinanderfolgender Übertragungsrahmen (23) erfolgt.

7. Verfahren nach Anspruch 6, **dadurch gekennzeichnet,**
- **dass** unmittelbar anschließend an das Ende einer Nachdchtenübermittlung oder anschließend an den letzten Obertragungsrahmen (23) von der Sendeeinheit (40) ein Stopp-Rahmen (27) abgesendet oder diesem angefügt wird,
- **dass** bei Eintreffen eines Stopp-Rahmens (27) in der Empfangseinheit (50) diese von der Erkennung und Überprüfung des Synchronisationsbits oder der Synchronisationsbitfolge von Übertragungsrahmen (23) auf die Erkennung und Überprüfung des Anfangsbit oder der Anfangsbitfolge von Synchronisationsrahmens (25) umschaltet und
- **dass** an den Stopp-Rahmen (27) unmittelbar folgend Synchronisationsrahmen angeschlossen oder abgesendet werden.

8. Verfahren nach Anspruch 6 oder 7, **dadurch gekennzeichnet, daß** die Länge des Stopp-Rahmens (27) zwischen einem Viertel der Gesamtlänge und der Gesamtlänge eines Übertragungsrahmens (23) liegt und/oder dass im Stopp-Rahmen zumindest eine Anzahl, vorzugsweise bei der Sprachübertragung unüblicher, insbesondere jeweils die Zahl 3FFh wiedergebender, Vektoren enthalten sind.

9. Verfahren nach einem der Ansprüche 1 bis 8, **dadurch gekennzeichnet, dass** das erste Bit oder die erste Bitfolge in einem Vektor, vorzugsweise des ersten Vektors, eines, vorzugsweise aller abgesendeten Übertragungsrahmen (23) willkürlich vorgesehen bzw. gesetzt wird.

10. Anordnung zur Übertragung von Daten über ein Übertragungsmedium (35) zwischen einer Sendeeinheit (40) und einer Empfangseinheit (50), wobei die zu übertragenden Daten in unmittelbar aufeinanderfolgenden, mit einem Übertragungsrahmengenerator (11) generierten, eine bestimmte Vektorenanzahl aufweisenden Übertragungsrahmen (23) abgesendet werden, wobei ein Bit oder eine Bitfolge in einem Vektor, zumindest des ersten abgesendeten Übertragungsrahmens (23) willkürlich gesetzt ist, wobei in der Empfangseinheit (50) ein Übertragungsrahmendetektor (16) vorgesehen ist, der dieses Synchronisationsbit oder diese Synchronisationsbitfolge während der Übertragung von Daten erkennt und damit die Empfangseinheit (50) im Verhältnis zur Sendeeinheit (40) synchronisiert, wobei die Sendeeinheit (40) eine Steuereinheit (6) mit einem Synchronisationsrahmengenerator (9) aufweist, mit dem zu Betriebsbeginn und im Leerlauf aufeinanderfolgend Synchronisationsrahmen (25) mit gleicher Länge wie die Übertragungsrahmen (23) generiert und dem Übertragungsmedium (35) aufgegeben werden, insbesondere zur Durchführung des Verfahrens nach einem der Ansprüche 1 bis 9, **dadurch gekennzeichnet,**
- **dass** jeder Synchronisationsrahmen (25) eine Mehranzahl von Vektoren (26) umfasst und jeder Vektor (26) des Synchronisationsrahmens (25) an einer definierten Stelle ein definiertes und von einer Steuereinheit (13) der Empfangseinheit (50) mit einem Synchronisationsrahmendetektor (18) erkennbares Anfangsbit oder eine von einer Steuereinheit (13) der Empfangseinheit (50) mit einem Synchronisationsrahmendetektor (18) erkennbare Anfangsbitfolge aufweist,
- **dass** mit dem Synchronisationsrahmengenerator (9) der Steuereinheit (6) der Sendeeinheit (40) das Anfangsbit oder die Anfangsbitfolge der Synchronisationsrahmen (25) eindeutig unterschiedlich zum Synchronisationsbit oder zur Synchronisationsbitfolge zumindest des ersten abzusendenden Übertragungsrahmens (23) generiert wird,
- und **dass** in der Empfangseinheit (50) mit der Steuereinheit (13) das Eintreffen eines Anfangsbits oder einer Anfangsbitfolge eines Synchronisationsrahmens (25) mit dem Synchronisationsrahmendetektor (18) und das Eintreffen des Synchronisationsbits oder der Synchronisationsbitfolge eines Übertragungsrahmens (23) im Übertragungsrahmendetektor (16) festgestellt und unterschieden werden, indem ein Vergleich des oder der eintreffenden Bits mit gespeicherten oder vorgegebenen Bitmustem durchgeführt wird.

11. Anordnung nach Anspruch 10, **dadurch gekennzeichnet, dass** von der Steuereinheit (6) der Sendeeinheit (40) bei Erhalt eines das Ende einer Datenübertragung anzeigenden Signals mit einem Stopp-Rahmengenerator (10) ein Stopp-Rahmen (27) generiert und unmittelbar dem letzten Übertragungsrahmen (23) folgend abgesendet wird.

12. Anordnung nach Anspruch 10 oder 11, **dadurch gekennzeichnet, dass** die Steuereinheit (13) der Empfangseinheit (50) eine Umschalteinheit (15) umfasst, mit der im Falle einer im Übertragungsrahmendetektor (16) erfolgenden Detektion eines Synchronisationsbits oder einer Synchronisationsbitfolge eines Übertragungsrahmens (23) von einer Detektion von Anfangsbits oder Anfangsbitfolgen der Synchronisationsrahmen (25) auf eine im Synchronisationsrahmendetektor (18) erfolgende Detektion von Synchronisationsbit oder Synchronisationsbitfolgen der Übertragungsrahmen (23) umgeschaltet wird.

13. Anordnung nach Anspruch 12, **dadurch gekennzeichnet, dass** die Umschalteinheit (15) der Steuereinheit (13) der Empfangseinheit (50) einen Stopp-Rahmendetektor (17) aufweist und bei Erkennen eines Stopp-Rahmens (27) mit einer Detektion von Anfangsbit oder Anfangsbitfolgen von Synchronisationsrahmen (25) beginnt.

14. Anordnung nach einem der Ansprüche 10 bis 13, **dadurch gekennzeichnet, dass** die Sendeeinheit (40) einen LD-CELP-Codierer (7) nach CCITT Empfehlung G.728, Version 1.0, Genf 09-1992; für die abgehenden Daten und die Empfangseinheit (50) einen LD-CELP-Decodierer (14) nach CCITT Empfehlung G.728, Version 1.0, Genf 09-1992, für die einlangenden Daten umfasst.

15. Anordnung nach einem der Ansprüche 10 bis 14, **dadurch gekennzeichnet, daß** die Steuereinheit (6) der Sendeeinheit (40) bei Eintreffen eines den Beginn einer Datenübertragung anzeigenden Signales oder eines PTT-Signales von einem Absenden von Synchronisationsrahmen (25) auf das Absenden von Übertragungsrahmen (23) umschaltet.

16. Anordnung nach einem der Ansprüche 10 bis 15, **dadurch gekennzeichnet, dass** das erste Bit oder die erste Bitfolge in einem Vektor, vorzugsweise im ersten Vektor eines, vorzugsweise aller Übertragungsrahmen (23), willkürlich gesetzt ist.

## Claims

1. A method of transmitting data between a sending unit (40) and a receiving unit (50) via a transmission medium (35), preferably for radio guidance stations or air-traffic control centres, wherein the data to be transmitted are sent in a direct succession of transmission frames (23) having a specified number of vectors, and wherein a bit or a bit sequence is randomly set in a vector of at least the first transmission frame (23) sent, and the receiving unit (50) is synchronised with the sending unit (40) by means of this set synchronisation bit or this set synchronisation bit sequence during the transmission of the data, wherein identical synchronisation frames (25) with the same length as the transmission frames (23) are successively sent by the sending unit (40) in open circuit, i.e. in the time interval between the transmission of data, and at the start of operation, **characterised in that**
- each synchronisation frame (25) comprises a plurality of vectors (26), and each vector (26) of the synchronisation frame (25) has, at a defined point, a defined initial bit which is detectable by the receiving unit (50) or a defined initial bit sequence which is detectable by the receiving unit (50) and which clearly differs from the synchronisation bit or the synchronisation bit sequence of at least the first transmission frame (23) sent,
- and **in that** the arrival of the synchronisation bit or the synchronisation bit sequence of the first transmission frame (23) is detected and evaluated by the receiving unit (50) as the start of a data transmission instead of a defined initial bit or a defined initial bit sequence in a first vector of a synchronisation frame (25).

2. A method according to claim 1, **characterised in that** only the first data or speech bit of the first vector of a transmission frame (23) is replaced by a synchronisation bit, and **in that** the initial bit of the vectors of the synchronisation frame (25) is set contrary to this first bit of the transmission frame (23).

3. A method according to claim 1 or 2, **characterised in that** transmission frames (23) and synchronisation frames (25) of the sending unit (40) are each generated and sent with 16 vectors each having 10 bits, and **in that** the first bit of the first vector of the first transmission frame (23) is set to "1" and the first bit of at least the first vector of the synchronisation frames (25) is set to "0".

4. A method according to any one of claims 1 to 3, **characterised in that**, for the continuous synchronisation of the sending unit (40) and the receiving unit (50) during the transmission of data, successively sent transmission frames (23) alternately have the synchronisation bit or the synchronisation bit sequence, e.g. 1, impressed upon the first transmission frame (23), and a synchronisation bit or a clearly differing synchronisation bit sequence, e.g. 0.

5. A method according to any one of claims 1 to 4, **characterised in that**
- a defined check bit sequence, preferably located at the end of the respective vector, is contained or defined in at least some, preferably in all vectors of each synchronisation frame (25),
- **in that** the respective check bit sequences in successive vectors of a synchronisation frame (25) form a check sequence detectable by the receiving unit (50) or a check pattern detectable by the receiving unit (50), wherein advantageously the respective check bit sequence in the vectors of the synchronisation frame (25) is defined by at least four bits which in successive vectors serially form a check sequence corresponding to the numbers 0h to Fh, and
- **in that** the receiving unit (50), for a predetermined number of successive vectors, checks their check bit sequence and the check sequence formed by the check bit sequences and, after at least one detection of such a check sequence after the arrival of the last vector of a synchronisation frame (25), awaits and detects the arrival of an initial bit or an initial bit sequence contained in the first vector of a following synchronisation frame (25) and, if appropriate, uses this arrival of an initial bit or an initial bit sequence of a synchronisation frame (25) or the thus defined transfer from the final vector of the synchronisation frame (25) to the initial vector of the following synchronisation frame (25) as a basis for their synchronisation.

6. A method according to any one of claims 1 to 5, **characterised in that**
- the receiving unit (50) detects and accepts the arrival of a synchronisation bit or a synchronisation bit sequence of a first transmission frame (23) as the start of the transmission of data instead of an initial bit or an initial bit sequence of a synchronisation vector, and
- **in tha**t, starting from the time of arrival of the synchronisation bit or the synchronisation bit sequence of the first transmission frame (23) until the arrival of a stop frame (27), detection and checking of the arrival of the optionally alternating different synchronisation bits or synchronisation bit sequences of successive transmission frames (23) takes place.

7. A method according to claim 6, **characterised in that**
- immediately after the end of a message transmission or after the last transmission frame (23), a stop frame (27) is sent by the sending unit (40) or is attached to the last transmission frame (23),
- **in that**, upon arrival of a stop frame (27) in the receiving unit (50), the latter switches over from the detection and checking of the synchronisation bit or the synchronisation bit sequence of transmission frames (23) to the detection and checking of the initial bit or the initial bit sequence of synchronisation frames (25), and
- **in that** synchronisation frames are connected to the stop frame (27) or sent immediately afterwards.

8. A method according to claim 6 or 7, **characterised in that** the length of the stop frame (27) lies between a quarter of the overall length and the overall length of a transmission frame (23) and/or in that at least some vectors, which are preferably not usual during speech transmission and in particular reproducing the number 3FFh in each case, are contained in the stop frame.

9. A method according to any one of claims 1 to 8, **characterised in that** the first bit or the first bit sequence is randomly provided or set in a vector, preferably the first vector, of one, preferably all transmission frames (23) sent.

10. An arrangement for the transmission of data between a sending unit (40) and a receiving unit (50) via a transmission medium (35), wherein the data to be transmitted are sent in a direct succession of transmission frames (23) having a specified number of vectors and generated by a transmission-frame generator (11), wherein a bit or a bit sequence is randomly set in a vector of at least the first transmission frame (23) sent, wherein, in the receiving unit (50), a transmission-frame detector (16) is provided which detects this synchronisation bit or this synchronisation bit sequence during the transmission of the data and thereby synchronises the receiving unit (50) with the sending unit (40), wherein the sending unit (40) has a control unit (6) with a synchronisation-frame generator (9), by means of which synchronisation frames (25) with the same length as the transmission frames (23) are successively generated and delivered to the transmission medium (35) at the start of operation and in open circuit, in particular for carrying out the method according to any one of claims 1 to 9, **characterised in that**
- each synchronisation frame (25) comprises a plurality of vectors (26), and each vector (26) of the synchronisation frame (25) has, at a defined point, a defined initial bit which is detectable by a control unit (13) of the receiving unit (50) having a synchronisation-frame detector (18) or an initial bit sequence which is detectable by a control unit (13) of the receiving unit (50) having a synchronisation-frame detector (18),
- **in that** the initial bit or the initial bit sequence of the synchronisation frames (25) is generated by the synchronisation-frame generator (9) of the control unit (6) of the sending unit (40) so as to differ clearly from the synchronisation bit or the synchronisation bit sequence of at least the first transmission frame (23) to be sent,
- and **in that**, in the receiving unit (50) with the control unit (13), the arrival of an initial bit or an initial bit sequence of a synchronisation frame (25) is detected by the synchronisation-frame detector (18) and the arrival of the synchronisation bit or the synchronisation bit sequence of a transmission frame (23) is detected in the transmission-frame detector (16) and a distinction is made by comparing the incoming bit or bits with stored or predetermined bit patterns.

11. An arrangement according to claim 10, **characterised in that** a stop frame (27) is generated by a stop-frame generator (10) and sent immediately following the last transmission frame (23) by the control unit (6) of the sending unit (40) upon receipt of a signal indicating the end of a data transmission.

12. An arrangement according to claim 10 or 11, **characterised in that** the control unit (13) of the receiving unit (50) comprises a switching unit (15) which, in the event of detection - in the transmission-frame detector (16) - of a synchronisation bit or a synchronisation bit sequence of a transmission frame (23), switches over from detection of initial bits or initial bit sequences of the synchronisation frames (25) to detection - in the synchronisation-frame detector (18) - of synchronisation bits or synchronisation bit sequences of the transmission frames (23).

13. An arrangement according to claim 12, **characterised in that** the switching unit (15) of the control unit (13) of the receiving unit (50) has a stop-frame detector (17) and, upon detection of a stop frame (27), commences detection of initial bits or initial bit sequences of synchronisation frames (25).

14. An arrangement according to any one of claims 10 to 13, **characterised in that** the sending unit (40) comprises an LD-CELP encoder (7) according to CCITT recommendation G.728, version 1.0, Geneva 09-1992 for the outgoing data and the receiving unit (50) comprises an LD-CELP decoder (14) according to CCITT recommendation G.728, version 1.0, Geneva 09-1992 for the incoming data.

15. An arrangement according to any one of claims 10 to 14, **characterised in that** the control unit (6) of the sending unit (40) switches over from sending synchronisation frames (25) to sending transmission frames (23) upon reception of a signal indicating the start of a data transmission, or a PIT signal.

16. An arrangement according to any one of claims 10 to 15, **characterised in that** the first bit or the first bit sequence is randomly set in a vector, preferably in the first vector of one, preferably all transmission frames (23).

## Revendications

1. Procédé de transmission de données par le biais d'un support de transmission (35) entre un module d'émission (40) et un module de réception (50), de préférence pour des centrales de radioguidage ou des installations de sécurité de la navigation aérienne, dans lequel les données à transmettre sont envoyées dans des trames de transmission (23) qui se suivent immédiatement les unes les autres et qui présentent un nombre déterminé de vecteurs et dans lequel un bit ou une séquence binaire est fixé(e) arbitrairement dans un vecteur d'au moins la première trame de transmission (23) envoyée et le module de réception (50) est synchronisé par rapport au module d'émission (40) avec ce bit de synchronisation fixé ou cette séquence binaire de synchronisation fixée pendant la transmission des données, des trames de synchronisation (25) identiques entre elles et d'une longueur identique à celle des trames de transmission (23) étant envoyées à la suite les unes des autres dans la période d'inactivité, c'est-à-dire la période entre la transmission de données, et au début du fonctionnement du module d'émission (40), **caractérisé**
- **en ce que** chaque trame de synchronisation (25) comprend une pluralité de vecteurs (26) et chaque vecteur (26) de la trame de synchronisation (25) présente à un endroit défini un bit initial défini et identifiable par le module de réception (50) ou une séquence binaire initiale définie et identifiable par le module de réception (50) qui se différencie de manière univoque du bit de synchronisation ou de la séquence binaire de synchronisation d'au moins la première trame de transmission (23) envoyée,
- et **en ce que** le module de réception (50) détecte et évalue la réception du bit de synchronisation ou de la séquence binaire de synchronisation de la première trame de transmission (23) à la place d'un bit initial défini ou d'une séquence binaire initiale définie dans un premier vecteur d'une trame de synchronisation (25) comme le début d'une transmission de données.

2. Procédé selon la revendication 1, **caractérisé en ce que** seul le premier bit de données ou vocal du premier vecteur d'une trame de transmission (23) est remplacé par un bit de synchronisation et **en ce que** le bit initial des vecteurs de la trame de synchronisation (25) est fixé à une valeur contraire de celle de ce premier bit de la trame de transmission (23).

3. Procédé selon la revendication 1 ou la revendication 2, **caractérisé en ce que** des trames de transmission (23) et des trames de synchronisation (25) contenant chacune 16 vecteurs de 10 bits chacun sont générées et envoyées par le module d'émission (40) et **en ce que** le premier bit du premier vecteur de la première trame de transmission (23) est mis à "1" et le premier bit d'au moins le premier vecteur des trames de synchronisation (25) est mis à "0".

4. Procédé selon l'une des revendications 1 à 3, **caractérisé en ce que**, pour synchroniser en permanence le module d'émission (40) et le module de réception (50) pendant la transmission de données, des trames de transmission (23) envoyées les unes à la suite des autres présentent alternativement le bit de synchronisation ou la séquence binaire de synchronisation superposée à la première trame de transmission (23), par exemple 1, et un bit de synchronisation ou une séquence binaire de synchronisation qui en diffère de manière univoque, par exemple 0.

5. Procédé selon l'une des revendications 1 à 4, **caractérisé**
- **en ce qu'**une séquence binaire de contrôle définie, de préférence placée à la fin du vecteur concerné, est contenue ou définie dans au moins une pluralité, de préférence dans la totalité des vecteurs de chaque trame de synchronisation (25),
- **en ce que** les différentes séquences binaires de contrôle dans des vecteurs consécutifs d'une trame de synchronisation (25) forment une séquence de contrôle identifiable par le module de réception (50) ou une configuration de contrôle identifiable par le module de réception (5), chaque séquence binaire de contrôle dans les vecteurs de la trame de synchronisation (25) étant avantageusement définie par au moins quatre bits qui forment successivement les nombres 0h à Fh adaptés à une séquence de contrôle dans des vecteurs consécutifs, et
- **en ce que** le module de réception (50), pour un nombre prédéterminé de vecteurs consécutifs, vérifie leur séquence binaire de contrôle et la séquence de contrôle formée par les séquences binaires de contrôle et, après avoir détecté au moins une fois une telle séquence de contrôle après la réception du dernier vecteur d'une trame de synchronisation (25), attend et détecte la réception d'un bit initial ou d'une telle séquence binaire initiale contenue dans le premier vecteur d'une trame de synchronisation (25) suivante et, si c'est le cas, se sert de cette réception d'un bit initial ou d'une séquence binaire initiale d'une trame de synchronisation (25) ou de la transition ainsi définie du vecteur final de la trame de synchronisation (25) au vecteur initial de la trame de synchronisation (25) suivante comme base pour sa synchronisation.

6. Procédé selon l'une des revendications 1 à 5, **caractérisé,**
- **en ce que** le module de réception (50) détecte et accepte la réception d'un bit de synchronisation ou d'une séquence binaire de synchronisation d'une première trame de transmission (23) à la place d'un bit initial ou d'une séquence binaire initiale d'un vecteur de synchronisation comme début de la transmission de données, et
- **en ce que**, entre le moment où le bit de synchronisation ou la séquence binaire de synchronisation de la première trame de transmission (23) est reçu(e) et le moment où une trame de fin (27) est reçue, la réception des bits de synchronisation ou des séquences binaires de synchronisation, différant le cas échéant de manière alternée, de trames de transmission (23) consécutives est détectée et vérifiée.

7. Procédé selon la revendication 6, **caractérisé**
- **en ce que**, immédiatement après la fin d'une transmission de données ou à la suite de la dernière trame de transmission (23), le module d'émission (40) envoie une trame d'arrêt (27) ou l'ajoute à ladite dernière trame de transmission,
- **en ce que**, à réception d'une trame d'arrêt (27) dans le module de réception (50), celui-ci passe de la détection et de la vérification du bit de synchronisation ou de la séquence binaire de synchronisation de trames de transmission (23) à la détection et à la vérification du bit initial ou de la séquence binaire initiale de trames de synchronisation (25), et
- **en ce que** des trames de synchronisation sont ajoutées ou envoyées immédiatement à la suite des trames d'arrêt (27).

8. Procédé selon la revendication 6 ou la revendication 7, **caractérisé en ce que** la trame d'arrêt (27) a une longueur comprise entre un quart de la longueur totale et la longueur totale d'une trame de transmission (23) et/ou **en ce que** la trame d'arrêt contient au moins une pluralité de vecteurs inhabituels dans le cas de la transmission vocale, de préférence reproduisant chacun notamment le nombre 3FFh.

9. Procédé selon l'une des revendications 1 à 8, **caractérisé en ce que** le premier bit ou la première séquence binaire est prévu(e) ou fixé(e) arbitrairement dans un vecteur, de préférence dans le premier vecteur, de l'une, de préférence de toutes les trames de transmission (23) envoyées.

10. Dispositif de transmission de données par le biais d'un support de transmission (35) entre un module d'émission (40) et un module de réception (50), dans lequel les données à transmettre sont envoyées dans des trames de transmission (23) qui se suivent immédiatement les unes les autres, générées au moyen d'un générateur de trames de transmission (11) et présentant un certain nombre de vecteurs, dans lequel un bit ou une séquence binaire est fixé(e) arbitrairement dans un vecteur d'au moins la première trame de transmission (23) envoyée, dans lequel il est prévu dans le module de réception (50) un détecteur de trames de transmission (16) qui détecte ce bit de synchronisation ou cette séquence binaire de synchronisation pendant la transmission de données et le module de réception (50) est synchronisé avec ce bit ou cette séquence par rapport au module d'émission (40), dans lequel le module d'émission (40) présente un module de commande (6) avec un générateur de trames de synchronisation (9) qui, au début du fonctionnement et pendant la période d'inactivité, génère des trames de synchronisation (25) consécutives de même longueur que les trames de transmission (23) et les introduit dans le support de transmission (35), en particulier pour réaliser le procédé selon l'une des revendications 1 à 9, **caractérisé**
- **en ce que** chaque trame de synchronisation (25) comprend une pluralité de vecteurs (26) et chaque vecteur (26) de la trame de synchronisation (25) présente à un endroit défini un bit initial défini et identifiable par un module de commande (13) du module de réception (50) avec un détecteur de trames de synchronisation (18) ou une séquence binaire initiale identifiable par un module de commande (13) du module de réception (50) avec un détecteur de trames de synchronisation (18),
- **en ce que** le générateur de trames de synchronisation (9) du module de commande (6) du module d'émission (40) génère un bit initial ou une séquence binaire initiale de la trame de synchronisation (25) qui diffère de manière univoque du bit de synchronisation ou de la séquence binaire de synchronisation d'au moins la première trame de transmission (23) à envoyer,
- et **en ce que**, dans le module de réception (50), le module de commande (13) détermine et différencie la réception d'un bit initial ou d'une séquence binaire initiale d'une trame de synchronisation (25) avec le détecteur de trames de synchronisation (18) et la réception du bit de synchronisation ou de la séquence binaire de synchronisation d'une trame de transmission (23) dans le détecteur de trames de transmission (16) en effectuant une comparaison du ou des bits reçus avec des configurations binaires mémorisées ou prédéfinies.

11. Dispositif selon la revendication 10, **caractérisé en ce que**, à réception d'un signal indiquant la fin d'une transmission de données, le module de commande (6) du module d'émission (40) génère au moyen d'un générateur de trames d'arrêt (10) une trame d'arrêt (27) et la transmet immédiatement à la suite de la dernière trame de transmission (23).

12. Dispositif selon la revendication 10 ou 11, **caractérisé en ce que** le module de commande (13) du module de réception (50) comprend un module de commutation (15) au moyen duquel, en cas de détection dans le détecteur de trames de transmission (16) d'un bit de synchronisation ou d'une séquence binaire de synchronisation d'une trame de transmission (23), le dispositif passe d'une détection de bits initiaux ou de séquences binaires initiales des trames de synchronisation (25) à une détection de bits de synchronisation ou de séquences binaires de synchronisation des trames de transmission (23) effectuée dans le détecteur de trames de synchronisation (18).

13. Dispositif selon la revendication 12, **caractérisé en ce que** le module de commutation (15) du module de commande (13) du module de réception (50) présente un détecteur de trames d'arrêt (17) et, lorsqu'il identifie une trame d'arrêt (27), commence par une détection de bits initiaux ou de séquences binaires initiales des trames de synchronisation (25).

14. Dispositif selon l'une des revendications 10 à 13, **caractérisé en ce que** le module d'émission (40) comprend un codeur LD-CELP (7) suivant la recommandation CCITT G.728, version 1.0, Genève, 09/1992, pour les données sortantes et le module de réception (50) comprend un décodeur LD-CELP (14) suivant la recommandation CCITT G.728, version 1.0, Genève, 09/1992, pour les données entrantes.

15. Dispositif selon l'une des revendications 10 à 14, **caractérisé en ce que**, à réception d'un signal indiquant le début d'une transmission de données ou d'un signal PTT, le module de commande (6) du module d'émission (40) passe de l'envoi de trames de synchronisation (25) à l'envoi de trames de transmission (23).

16. Dispositif selon l'une des revendications 10 à 15, **caractérisé en ce que** le premier bit ou la première séquence binaire d'un vecteur, de préférence le premier vecteur de l'une, de préférence de toutes les trames de transmission (23) est fixé arbitrairement.
